# EUROPEAN PATENT APPLICATION

(11) **EP 3 289 859 A1**
(43) Date of publication of application: **07.03.2018**
(21) Application number: 17196466.1
(22) Date of filing: 13.05.2015
(51) Int. Cl.: A01K 1/01

(54) **MANURE SCRAPER**

(30) Priority: 18.06.2014 NL 2013022
(62) Divisional of application: 15167641.8
(71) Applicant: G. van Beek & Zn. Kalverstalinrichting B.V., 3771 MK Barneveld (NL)
(72) Inventor: van Beek, Geurt Gerardus, 3771 MK Barneveld (NL)
(74) Representative: van Essen, Peter Augustinus

(57) **Abstract**

The invention relates to a manure scraper comprising a scraper frame holding a scraper bar extending in a longitudinal direction and comprising a scraper surface and a lower end for engaging a stable floor, said scraper frame comprising guiding means for guiding said scraper frame over said stable floor with said lower end of said scraper bar engaging a surface of said stable floor and along guiding surfaces of a stable.

## Description

### BACKGROUND OF THE INVENTION

The invention relates to a manure scraper for shoving the manure over floor parts towards a passage and into a manure storage. The manure scraper is used in a stable, particularly a livestock stable for instance for calves, but also other livestock traditionally housed on grids such as cattle and pigs.

A stable, particularly including a manure cellar below the walk-on floor of a livestock stable is generally known. Usually grids are provided over such manure cellars so that manure and urine can freely drain into the manure cellar. Such a grid is for instance known from NL2004490 and NL2004491.

It is known that in such a manure cellar a mixture of faeces and urine results in the development of ammonia. It particularly turned out that a contact time of 2 hours already results in considerable ammonia development.

Therefore there is room for improvement on these stables that have been known per se for a long time. To that end, applicant in EP2494864 developed a stable with manure storage based upon concrete floor panels mounted under an angle to allow liquid manure fractions, in particular urine, to be separated from solid fractions.

Many manure scrapers were developed to more or less automatically clean the stables of livestock housings. For instance, NL9200871 and NL1015290 show such manure scrapers.

EP1401262 according to its abstract discloses a mucking-out system. It comprises a mucking-out slide comprising a central element on which drive forces act in a back and forth movement, and at least one slide arm which is articulated in such a way that it can pivot freely on the central element between a folded-in position and a folded-out position, for the one-sided removal of the dung, liquid manure etc. situated on the corridor. Said arm folds out automatically during the transport movement, and folds in automatically during the non-transport, return movement. The corridor of a pen comprises grooves, and the direction of displacement (X, -X) of the mucking-out slide is oriented parallel to the grooves of the corridor. A rake-type element extending in the longitudinal direction of the slide is arranged in a displaceable manner on the slide arm, and means are provided for displacing the rake-type element between a first position in which the prongs of the rake-type element are inserted into the grooves, and a second position in which the prongs are not inserted into the grooves.

FR2128341 discloses a manure scraper that has foldable arms. Manure may collect at the V-shaped centre.

US2009293911 according to its abstract discloses an apparatus which comprises a front-mounted collection means for a vacuum tank for the collection of liquid or semi-liquid materials. The collection means comprises a substantially V-shaped housing with a scraper at the bottom thereof, a height adjustable suction inlet at the apex thereof, and a pair of laterally adjustable pivoting wings for varying its width to correspond to that of an alley or gutter. A plurality of rotary feeders, each having a vertical axis of rotation, are mounted to the housing adjacent the scraper to prevent accumulation of the materials on the scraper. The feeders do not contact either the surface upon which the scraper is operated, nor the scraper itself, but serve to mix thick consistency materials with thinner consistency materials and also to dislodge any accumulation that does occur.

### SUMMARY OF THE INVENTION

It is an object of the invention to provide improved livestock housing equipment.

It is a further or additional object of the invention to improve the living conditions of livestock, for instance calves.

It is a further or additional object of the invention to provide an improved cleaning of a stable with manure storage or a stable including manure cellar.

It is a further or additional object of the invention to provide an improved manure cellar in which manure and urine of livestock are separated from each other at an early stage, and/or to discharge the manure and urine out of the stable as soon as possible, away from the livestock.

For that purpose the invention provides a manure scraper according to claim 1.

The current invention intends to separate dung or manure fractions in (solid) faeces and (liquid) urine at an early stage.

In an embodiment, the means for at least disturbing manure from displacing longitudinally along the scraper surface of the scraper bar comprise a series of dividers extending from the scraper surface of the scraper bar for at least disturbing manure from displacing longitudinally along the scraper surface of the scraper bar.

When separating manure fractions, this may be beneficial. It was found that in working conditions, in particular when using the manure scraper on slanted floors, that manure will run along the scraper bar. Thus, manure heaps up on one side, and may even end up at undesired places, in particular when it is desired to separate thin fractions of manure with mainly urine from thick fractions comprising mainly faeces. The relatively simple feature of the means, for instance dividers, prevent or at least hinders manure from displacing along the bar surface in longitudinal direction.

In an embodiment, the dividers are provided at every 50-200 cm along the scraper bar.

In an embodiment, the dividers extend 10-50 cm from the scraper surface of the scraper bar.

In an embodiment, the scraper bar has a lower end for engaging a floor, and the dividers comprise lower ends ending substantially at or up to the end or the lower end of the scraper bar.

In an embodiment, the manure scraper comprises a frame holding the scraper bar.

The invention further relates to the use of the manure scraper on slanted floors.

In an embodiment, the manure scraper in suitable for a stable comprising a manure storage, a walk-on floor provided with passages for manure and urine, a bottom floor, provided below the walk-on floor, said bottom floor comprising a (top) surface at a fall. In this setting, the manure scraper runs on or over the surface of the bottom floor.

In an embodiment, the bottom floor comprises a discharge channel at a lower part of said fall.

In an embodiment, the discharge channel discharges into a reservoir for a thin fraction, mainly urine, of the manure. In an embodiment, the reservoir is separated from the manure storage.

In an embodiment, the bottom floor comprises a passage for a solid fraction of the manure and its collection in the manure storage. The passage may comprise a slit which may run substantially parallel to the scraper bar.

The manure scraper is provided for shoving substantially the solid fraction of the manure, in particular the surface of the bottom floor, over floor parts towards the passage and into the manure storage.

In an embodiment, the manure scraper in suitable for a stable comprising a manure storage, a walk-on floor provided with passages for manure and urine, and below the walk-on floor a bottom floor comprising a series of concrete floor parts and with a top surface at a fall, and a concrete discharge channel having side walls and a discharge channel bottom at a fall, wherein the series of floor parts with an edge connect to side walls of the discharge channel so that on either side of the discharge channel floor parts at a fall slope down to the discharge channel, wherein the fall of the discharge channel is transverse to the fall of the floor parts. The discharge channel ends in a reservoir for a thin fraction of the manure that has been separated from the manure storage. In that way for instance urine can easily be separated. At a longitudinal side, transverse to the discharge channel, the bottom floor comprises a passage for the solid fraction of the manure and its collection in the manure storage. The stable is thus provided with a manure scraper for shoving the manure over the floor parts towards the passage and into the manure storage. In that way mucking out can be automated.

Due to the selected stable it is possible to easily separate solid and liquid manure, such as separating urine and solid manure. Moreover keeping a stable clean is not laborious anymore, mucking out is almost automatic or is easy to automate. The manure can also be taken away from the livestock more quickly.

In an embodiment, the manure scraper runs on the top surface of the bottom floor. In an embodiment, the longitudinal direction of the scraper bar extends in the fall or slanted direction of the bottom floor.

In one embodiment the manure storage comprises a manure cellar. In that way storage hardly takes up space. Optionally the manure cellar can be connected to a bio fermentation installation. In one embodiment the manure cellar is a bio fermentation installation.

In one embodiment the walk-on floor is provided at least partially over the manure cellar. When the floor parts are liquid proof and preferably to a high degree, most preferably almost fully vapour proof, the livestock that stands above it is no longer troubled by the manure.

In one embodiment the floor parts at least partially form a ceiling for the manure cellar. In that way the manure cellar is easy to realise.

In one embodiment, for instance transverse to the discharge channel, at least one of the floor parts or a space between two floor parts provides a passage for the solid fraction of the manure and its collection in the manure cellar. In one embodiment the liquid proof bottom floor formed by the floor parts has such a passage, for instance at a head end.

In one embodiment the invention regards a stable comprising a manure cellar, a walk-on floor provided with passages for manure and urine over the manure cellar, and below the walk-on floor a series of concrete floor parts and with a top surface at a fall, and which at least partially form a ceiling for the manure cellar, and a concrete discharge channel with side walls and a discharge channel bottom at a fall, wherein the series of floor parts with an edge connect to side walls of the discharge channel so that on either side of the discharge channel floor parts at a fall slope down to the discharge channel and the fall of the discharge channel is transverse to the fall of the floor parts, wherein the discharge channel ends in a reservoir for a thin fraction of the manure, wherein at a longitudinal side, transverse to the discharge channel, at least one of the floor parts or a space between two floor parts provide a passage for the solid fraction of the manure and its collection in the manure cellar, and wherein the stable is provided with a manure scraper for shoving the manure over the floor parts towards the passage and into the manure cellar.

One effect of this invention may among other things be a reduction of the ammonia emission. In addition the invention may reduce the energy consumption the ultimate goal being energy neutral building. The lifespan of this invention may also be longer than that of the current systems. Finally it is also a point of particular interest that the system can be produced and processed in accordance with health and safety regulations.

Due to the floor parts of a closed and resistant top layer and at a slight fall, urine drains away from the manure. A fall of as much as 2% suffices. The quick separation of urine from the manure results in a considerably reduced ammonia emission. Moreover the separated manure proved to be capable of being processed better. It namely turned out that with a contact time of more than 2 hours considerable ammonia development arises. By also laying the stable floor at a fall of 1% further separation can be achieved. Livestock such as calves and cows namely proved to be hindered hardly at all by such a fall. The floor parts in one embodiment form an intermediate floor over the actual manure cellar.

Further embodiments of the manure cellar and its various parts, as well as their particular way of manufacturing are described in the dependent claims and in the description of the embodiments.

In one embodiment the floor parts comprise a first and second series of floor parts of prefab self-sealing concrete with, when in use, a substantially level lower side and a top surface at a fall with respect to the lower side.

In one embodiment the fall of the floor parts is 1-5 degrees. In one embodiment the fall is particularly 1-3 degrees. In one embodiment specifically 1.5-2.5 degrees.

In one embodiment the discharge channel is made of prefab self-sealing concrete having side walls, a lower side and a discharge channel bottom at a fall with respect to the lower side.

In one embodiment the fall of the channel bottom is 0.3-1.0%. In one embodiment the fall is particularly 0.4-0.6%.

In one embodiment the stable comprises a reservoir for liquid manure, often mainly the urine, and a manure storage for the (more) solid fraction. These two have been separated. In one embodiment interior space for the livestock, and the reservoir and the manure storage are hermetically closed off from the interior space. In an alternative or additional embodiment the stable has a stable wall bounding the interior space, and the reservoir and the manure storage are outside of the stable wall. In that way the livestock is even less troubled by the manure.

The invention further relates to a stable comprising a first and second series of floor parts of prefab self-sealing concrete with, when in use, a substantially level lower side and a top surface at a fall with respect to the lower side, and a discharge channel of prefab self-sealing concrete with side walls and a discharge channel bottom at a fall, wherein the series of floor parts with an edge connect to side walls of the discharge channel so that on either side of the discharge channel floor parts at a fall slope down to the discharge channel and the fall of the discharge channel is transverse to the fall of the floor parts.

Due to the level lower bottom and the top surfaces and discharge channel bottom, respectively, at a fall with respect to the lower sides, positioning is very easy. Particularly as the falls are very small, positioning the various parts proved to be complex. Now the various parts can easily be positioned straight and level, and without further positioning, the floor parts and the discharge channel can be arranged on it.

In one embodiment the fall of the floor parts is 1-5 degrees. In a further embodiment the fall is 1-3 degrees. The fall specifically is 1.5-2.5 degrees. In that way it turned out that the liquid fraction of the manure could be properly separated from the solid fraction.

In one embodiment the fall of the channel bottom is 0.3-1.0%. In particular the fall is 0.4-0.6%. The liquid fraction still appeared to be sufficiently quick to drain away to a separate storage and separated from the solid fraction. Particularly the manure cellar for the liquid fraction is separated from the manure cellar for the solid fraction. In that way the liquid fraction can also be stored from the discharge channel into a closed-off reservoir or a closed-off tank in liquid connection with the discharge channel. In that way evaporation is prevented as much as possible.

In one embodiment at least two concrete channel parts connecting to the head end form a continuous channel at a fall. In that case the channel parts have a length of at least 10 metres. In one embodiment the channel parts have a connecting, continuous lower side. In that way at least two separate channel parts of 5 metres each can be provided, each having a channel bottom at a fall. By providing the level bottom with a different bottom thickness, said channel parts can connect wherein the channel bottom has a continuous channel bottom at a fall, and a level continuous lower side.

In one embodiment the floor parts are 7-20 meters long by 1-5 meters wide. In that way they can be supplied by road.

In one embodiment the discharge channel parts are 9-20 metres long. In that way they can be supplied by means of relatively standard road transport.

In one embodiment the discharge channel has an inner width of 8-20 cm. It turned out that this provides a discharge capacity that is sufficient yet quick enough.

In one embodiment the discharge channel ends in a reservoir for a thin fraction of the manure. In one embodiment the bottom floor, particularly at least one of the floor parts, or a space between two consecutive floor parts, at a longitudinal side provides a passage for the solid fraction of the manure and its collection in a manure cellar. In a simple way a limited, in one embodiment a closable passage can be provided for the solid manure. In that way a passage can be provided at a head end of the bottom floor.

In one embodiment the floor parts are arranged between a stand-on floor and the bottom of the manure cellar. In a further embodiment the floor parts form a ceiling of the manure cellar.

The invention further relates to a floor part, particularly a floor part intended and suitable for the manure cellar according to this description, comprising a concrete slab having a length of at least 9 metres, a width of at least 1 metre, a substantially level lower side, an opposite upper side at a fall of 1-4 degrees with respect to the lower side, and wherein at least the upper side is provided with a layer of B65 concrete.

The invention furthermore relates to a discharge channel, particularly a discharge channel intended and suitable for a manure cellar according to this description, comprising at least two concrete channel parts connecting to the head end and forming a continuous channel at a fall and having a length of at least 10 metres, and wherein the channel parts have a connected, continuous lower side.

In one embodiment the channel thereof has a fall of between 0.2 and 2%. In one embodiment the channel thereof has a fall of between 0.4 and 1%.

The invention further relates to a stable comprising a manure cellar, a walk-on floor provided with passages for manure and urine over the manure cellar, and below the walk-on floor a series of concrete floor parts and with a top surface at a fall and which at least partially form a ceiling for the manure cellar, and a concrete discharge channel having side walls and a discharge channel bottom at a fall, wherein the series of floor parts with an edge connect to side walls of the discharge channel so that on either side of the discharge channel floor parts at a fall slope down to the discharge channel and the fall of the discharge channel is transverse to the fall of the floor parts, wherein the discharge channel ends in a reservoir for a thin fraction of the manure, wherein at a longitudinal side, transverse to the discharge channel, at least one of the floor parts or a space between two floor parts provides a passage for the solid fraction of the manure and its collection in the manure cellar, and wherein the manure cellar is provided with a manure scraper for shoving the manure over the floor parts towards the passage.

The invention further relates to a stable comprising:
- a manure storage, a walk-on floor provided with passages, such as a grid floor, for manure and urine,
- below the walk-on floor a liquid proof concrete construction floor and with a top surface at a fall, and a concrete discharge channel with side walls and a discharge channel bottom at a fall, wherein the liquid proof construction floor connects to side walls of the discharge channel so that on either side of the discharge channel the liquid proof construction floor at a fall slopes down to the discharge channel and the fall of the discharge channel is transverse to the fall of the liquid proof construction floor, wherein the discharge channel ends in a reservoir for a thin fraction of the manure, and wherein the liquid proof construction floor provides a passage for the solid fraction of the manure and its collection in a manure storage, and wherein the stable is provided with a manure scraper for shoving the manure over the liquid proof construction floor towards the passage.

In one embodiment the passage is at a longitudinal side of the liquid proof construction floor. In one embodiment the passage is transverse to the discharge channel.

This stable has to be poured on location, in situ. The advantage of the easy separation of the thin and thick fraction, or the urine and the more (solid) manure remains.

The invention further relates to a manure scraper comprising a scraper bar extending in a longitudinal direction and comprising a scraper surface, said scraper bar comprising means for at least disturbing manure from displacing longitudinally along the scraper surface of the scraper bar. In particular when used on slanted floors, for instance with the longitudinal direction extending in the slanted direction, the manure scraper provides an improvement.

The invention furthermore relates to a device or a method provided with one or more of the characterising measures described in the attached description and/or shown in the attached drawings.

It will be clear that the various aspects mentioned in this patent application can be combined and each individually may be eligible for a divisional patent application.

### SHORT DESCRIPTION OF THE DRAWINGS

In the attached figures an embodiment is shown of livestock housing equipment, a manure cellar and prefab concrete floor parts, in which:
Figure 1 shows a cross-section of a longitudinal section of a floor part and a cross-section of a discharge channel;
Figure 2 shows a side view of figure 1;
Figure 3 shows a top view of a calves' stable provided with the floor parts of figure 1 and with a grid (stand-on) floor;
Figure 4 shows a cross-section of figure 3;
Figure 5 shows a view in perspective of an embodiment of a stable in which each time a part of the floor layers has been cut away, and
Figure 6 shows a view in perspective of the manure cellar of a stable.
Figures 7-9 show various views and details of a manure scraper, in particular for a livestock housing described in figures 1-6.

### DETAILED DESCRIPTION OF THE DRAWINGS

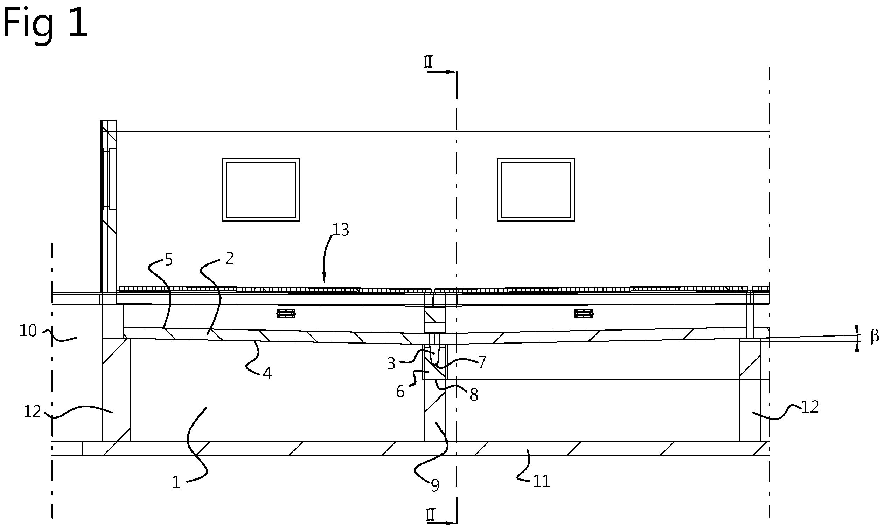

Figure 1 shows a cross-section of a part of a manure cellar 1 provided with floor parts 2 and a discharge channel 3 consisting of discharge channel parts 6 in cross-section. Said cross-section is along the longitudinal direction of the floor slabs 2 which on either side connect to a discharge channel 3. The lower side 4 of the floor slabs 2 is essentially level. At the one end the thickness is greater than on the side connecting to the discharge channel 3. In that way the upper side 5 of the floor slabs 2 is at a fall towards the discharge channel 3. The top surface is at an angle α to the lower surface of the floor slabs 2. The angle will in actual practice be small in order to prevent that the manure slides along into the channel. In one embodiment said angle will be between 1 and 5 degrees. In the embodiment shown said angle is between 1 and 3 degrees. The floor slabs will usually be 7-20 metres long and 1-5 metres wide. At the thickest head end the slabs usually are 10-20 cm thick and at the thinnest head end 8-15 cm thick.

The discharge channel 3 in this case is a simple channel having walls and a bottom 7. Said bottom is also at a fall, in this embodiment transverse to the fall of the floor slabs 2. The bottom 7 of the discharge channel 3 usually is at a fall of 0.3-2%. In this case the bottom 7 of the discharge channel 3 is at a fall of 0.4-0.7%. The lower side 8 of the discharge channel 3 usually is level. Preferably the discharge channel 3 is built up with discharge channel parts 6 of for instance 10 metres long. In one embodiment of said parts 6 the lower sides 8 connect in one plane. As a result they are easy to position on a bearing wall 9.

The manure cellar 1 is for the collection of the thick fraction of the manure, the thin fraction is collected in a separate reservoir 10. The manure cellar 1 has a cellar floor 11 and side walls 12 forming a boundary of the manure cellar 1. The floor slabs 2 support on the side walls 12. In this embodiment the manure cellar is provided below the floor slabs and discharge channel. It will be clear that in an alternative embodiment of the stable the floor slabs 2 can also form the actual stable floor.

For the collection of the manure and urine a walk-on grid 13 is provided over the floor slabs 2. Details of a walk-on grid 13 have been described in the Dutch patents mentioned earlier.

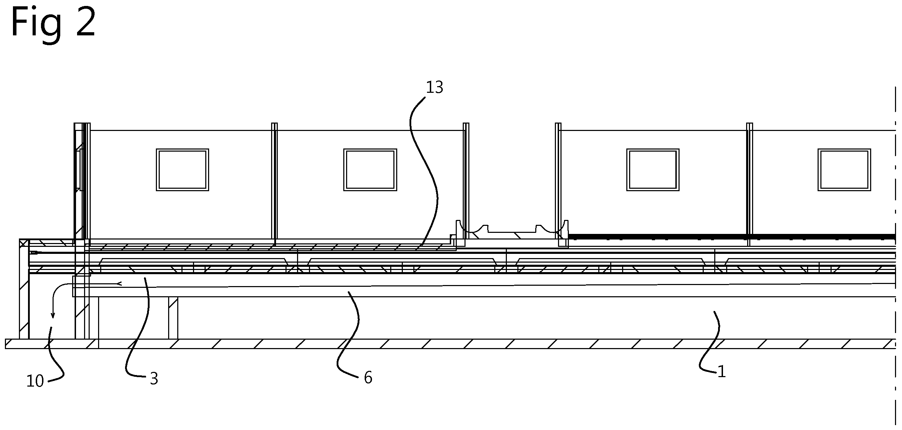

When pouring the concrete discharge channel parts 6 the lower sides 4 formed the upper side of the moulding material. By choosing for instance different moulds, or similar moulds each having a different insert piece, each consecutive discharge channel part 6 has channel positioned deeper than the previous one, so that when the discharge channel parts 6 with the lower side 8 are positioned in a plane with head ends connected, a continuous discharge channel has been formed which has a bottom 7 connected at a fall. This can be seen in figure 2 in the side view wherein the discharge channel is shown in dotted lines. The bottom of the channel has a width of 7-20 cm.

The floor slabs 2 at one outer end support on respective edges of the discharge channel 3. In order to realise a proper sealing between those edges and the discharge channel 3, the edge of the discharge channels may be provided with a slot that is filled with a permanently elastic strip, such as for instance a hydrophilic bentonite strip, for instance Bentorub®. The edges can then be provided with some mortar before the floor slabs 2 are arranged.

The floor slabs 2 can be coupled one to the other at the longitudinal sides by means of a so-called concave-convex connection so that the slabs can be connected to each other virtually seamless.

The surfaces of the discharge channel 3 and of the floor parts that contact the urine preferably are of B65 or B80 concrete. This concrete is described in Dutch standard VBT 1995, currently NEN 8005 or NEN EN 206-1. In order to make smoothly finished pre-shaped parts the parts are often poured of self-sealing concrete.

The self-sealing concrete usually comprises cement, a filler such as for instance fly ash or limestone flour. In addition a plasticizer is added. Then there will be question of a so-called third-generation self-sealing concrete. In this floor joist 4 and the supporters 2 such concrete is extremely suitable as due to the smooth and closed surface the urine and manure have relatively little influence.

In one embodiment a first layer of concrete that has a high resistance against urine, can be poured into a mould for forming the surface that will contact the urine. Subsequently the mould can be filled further with for instance the standard self-sealing concrete.

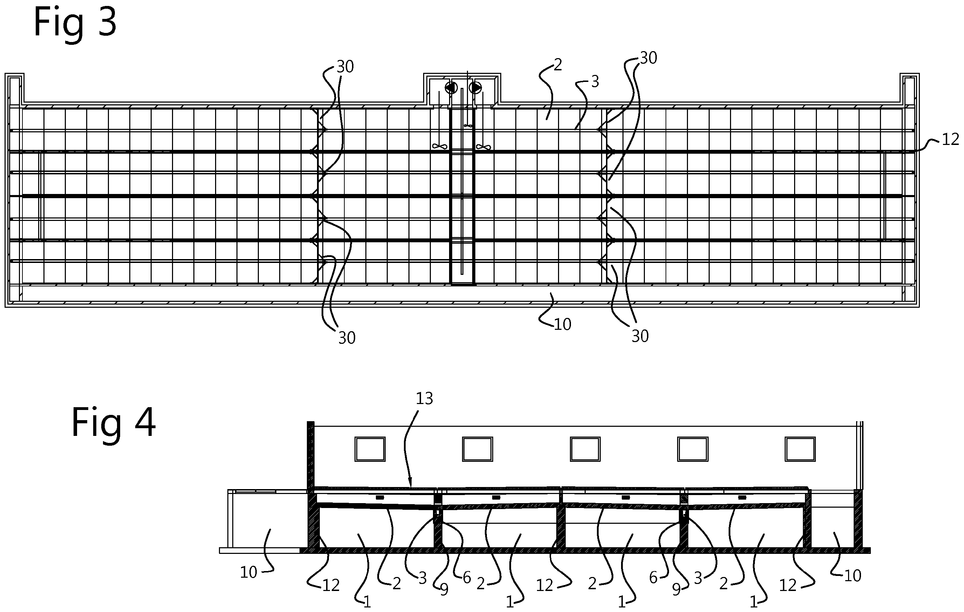

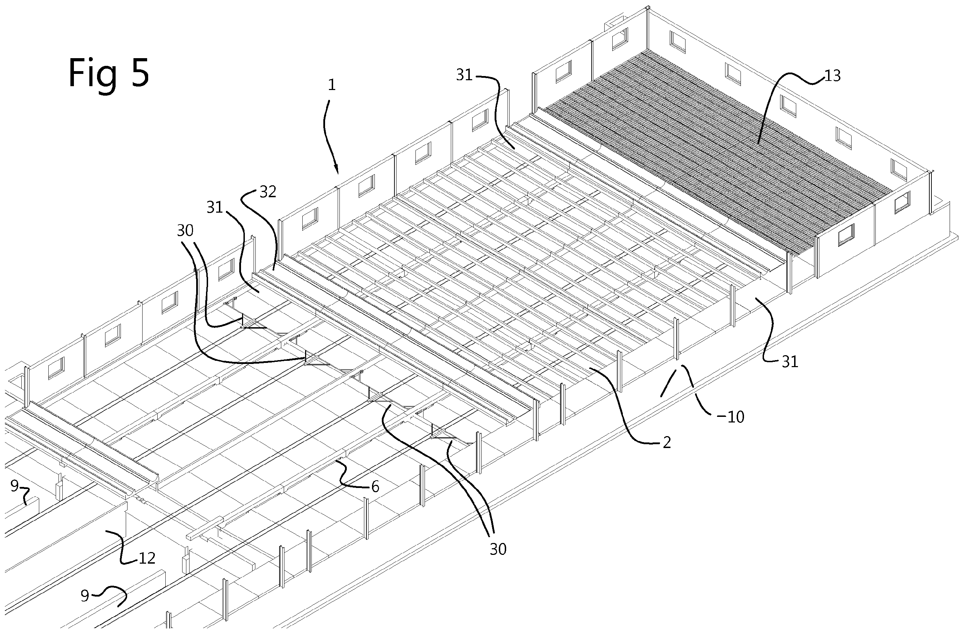

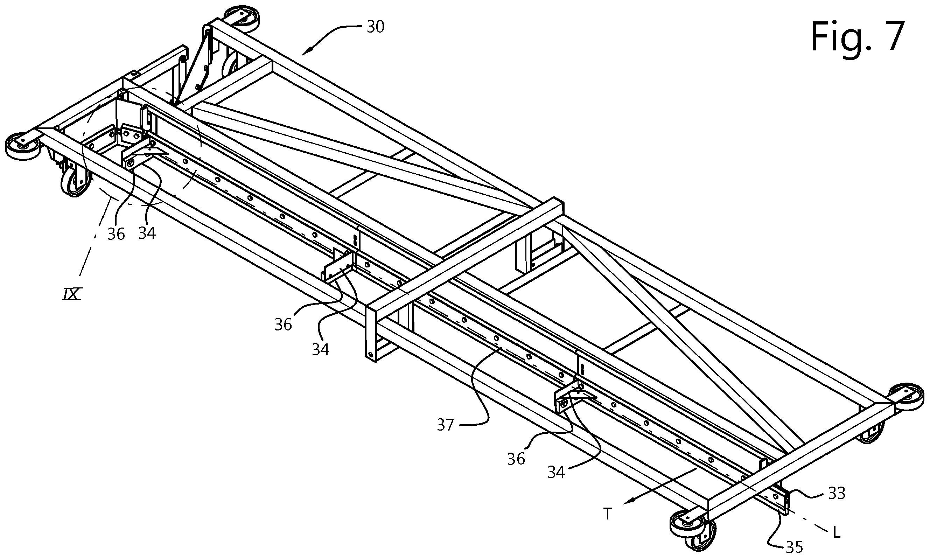

In figures 3-6 an overview is shown of the use of the floor parts 2 with discharge channel parts 6. The discharge channel 3 ends in a circumferential storage 10 for the urine and the thin liquid fraction. In figure 2 this had already been indicated by means of the arrow on the left. In figure 3 an embodiment of the stable is shown with the floor slabs 2 and discharge channel 3. Around the floor section with the floor slabs 2 and discharge channels 3 a circumferential reservoir 10 for the thin fraction, for instance urine, is arranged. In figure 5 a view in perspective of the stable of figure 3 is shown. At the outer right the stand-on floor 13 with grids is shown. As described they may for instance be grids as discussed in the Dutch patents mentioned earlier. More to the left only the supporting beams of the grids are still visible. The floor slabs 2 with discharge channels are positioned not far below the stand-on floor. In a further view further to the left the supporting beams of the stand-on floor have also been left out. Now manure scrapers 30 are visible. Said manure scrapers shove the solid fraction of the manure in the longitudinal direction of the stable towards an opening (31) between the floor slabs 2 so that the solid manure fraction drops into the manure cellar 1. The opening (31) can be realised in different ways. A simple possibility is to leave a space between the floor parts so that the manure is able to drop between the floor parts and into the manure cellar. Alternatively the floor parts may be provided with an opening or slit that may or may not be closable, through which the (more) solid manure can drop into the manure cellar. In one embodiment the open surface of the sum of the openings (31) is as small as possible so as to close off the manure from the outside world as quickly as possible. The opening (31) may for instance be arranged at every other set of floor parts. It may also be possible for instance to provide an opening or passage (31) at the outer ends of the stable. Said opening (31) as well may if so desired be closable. In case of fewer openings (31) for instance the manure pusher or manure scraper (30) may move reciprocally more often. In one embodiment the manure scraper (30) scrapes in one going direction over the floor slabs, and the manure scraper (30) is lifted from the floor slabs in the returning motion. In that way all manure is moved in one direction only. The manure scraper will be further discussed in figures 7-9.

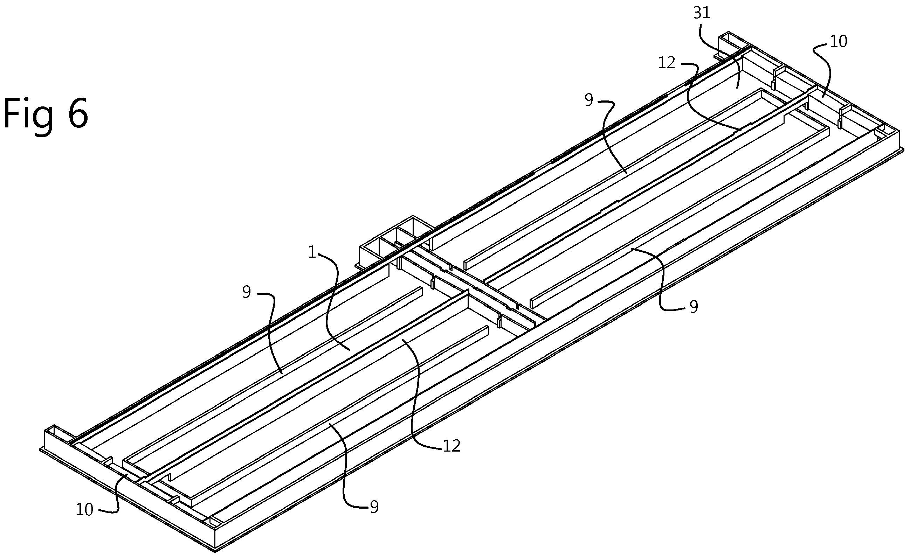

For that matter the manure cellar can partially be seen on the outer left-hand side of figure 5. An overall view can be seen in figure 6. Clear are the circumferential reservoir 10 for the thin fraction of the manure and the manure cellar 1 for the thick manure fraction. For moving the thick manure fraction a set of mixers is often provided in the manure cellar, as schematically shown in the top middle of figure 3.

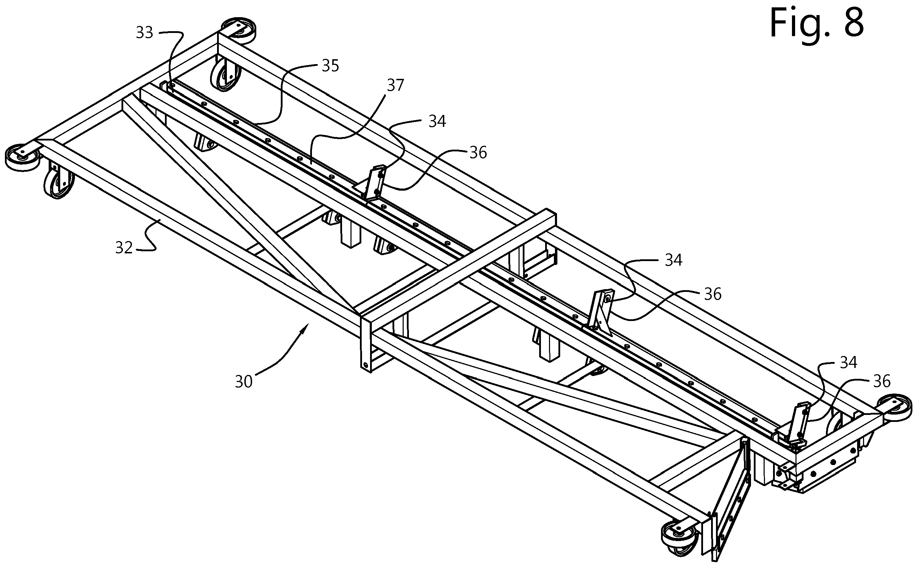

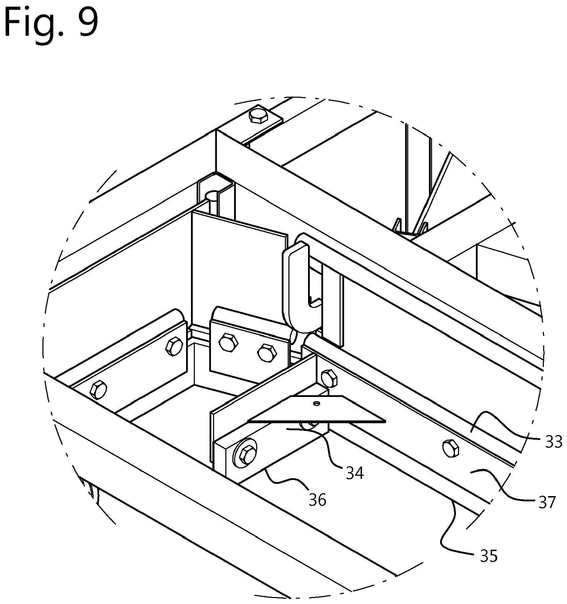

In figure 7, a perspective view of a manure scraper 30 is show, from the direction in which the manure scraper 30 pushes a solid fraction of manure to the left. In figure 8 a perspective view of the manure scraper 30 of figure 7 is shown from the opposite direction. In figure 9, a detail as indicated in figure 7 is enlarged.

Manure scrapers 30 as such are known in many configurations. The manure scraper 30 of figure 7 comprises a frame 32 supporting a scraper bar 33. Scraper bar 33 is provided in such a way that it slides over a floor when the manure scraper 30 is moved in direction T. It comprises a lower end 35 that can shift over surface 5 of floor 2. It may comprise a rubber strip that shifts over the floor. In this action, the mostly solid fraction of the manure is pushed along, against the scraper surface 37. The manure bar extends in a longitudinal direction L, and is moved in transvers direction T, normal to the scraper bar 33.

Scraper bar 33 comprises means for hindering, in particular preventing, displacement of manure in longitudinal direction along the manure bar 33. In an embodiment, Scraper bar 33 comprises a series of dividers 34 that extend from the manure bar. Here, the dividers extend in transvers direction of the manure bar, in normal direction. The dividers 34 extend from the scraper surface 37. The dividers 34 are here simple short bars or beams. These dividers 34 here comprise lower ends 36 that extend to the level of the lower ends 35 of the manure bar 33. In this way, when the manure bar 33 moves the manure, in particular over a slanted floor as described above, the manure will be prevented as much as possible from displacing in longitudinal direction along the manure bar 33. The dividers may have all sorts of shapes. The beams shown in the figures are a simple means for preventing displacement of manure in longitudinal direction along the manure bar 33. In an embodiment, the scraper bar 34 comprising a series of dividers 34 is a bar that has a zigzag shape when viewed normal to a plane defined by the transverse direction and longitudinal direction (i.e., from above). The scraper bar 34 can have parts that are bent away from the longitudinal direction and back again, so as to provide parts of the scraper bar 33 that provide the dividers 34. Thus, part of the scraper bar 33 have a triangular wave shape (when viewed from above), these parts providing the dividers 34. Between the triangular wave parts, the scraper bar 33 can have straight parts. The bar may even have a wave shape when viewed from above. Functionally, the dividers 34 are provisional on or of the scraper bar 33 that hinder manure from flowing or displacing.

In figure 8 it can be seem how the scraper bar 33 is rotated along a longitudinal axis a distance above the lower end 35. To that end, the manure scraper 30 comprises a scraper bar actuator (not shown). Other way of increasing the space between a floor and the lower end of the manure bar 33 are also possible, for instance lifting or raising the bar 33.

It was found that known manure scrapers 30, in particular when used in slanted floors, had a problem that the manure shifts in longitudinal direction along the scraper bar 33. In that way, the bar 33 becomes loaded in an undesired manner. Furthermore, manure, in particular the solid fraction, is displaced in the wrong direction and may even end up in contact with the thin fraction of the urine, which in undesirable as explained earlier.

The manure scraper 30 may comprise various similar scraper bars 33. For instance, a common frame may hold multiple scraper bars 33. These bars 33 of the common frame may be coupled to a displacement means. In the embodiment shown, the scraper bar 33 is held by scraper frame 32. This scraper frame 32 here comprises guiding means, here wheels for rolling over the floor surface and wheels for rolling along guiding surfaces of a stable.

It will be clear that the above description is included to illustrate the working of preferred embodiments of the invention and not to limit the scope of the invention. Starting from the explanation above many variations that fall within the spirit and scope of the present invention will be evident to an expert.

## Claims

1. A manure scraper (30) comprising a scraper frame (32) holding a scraper bar (33) extending in a longitudinal direction (L) and comprising a scraper surface (37) and a lower end (35) for engaging a stable floor, said scraper frame (32) comprising guiding means for guiding said scraper frame (32) over said stable floor with said lower end of said scraper bar (35) engaging a surface of said stable floor and along guiding surfaces of a stable.

2. The manure scraper (30) of claim 1, wherein said guiding means comprise wheels for rolling over a floor surface and wheels for rolling along guiding surfaces of the stable.

3. The manure scraper (30) of claim 1 or 2, wherein said scraper frame (32) comprises a rectangular frame having a wheel at each corner for rolling along said guiding surfaces of the stable.

4. The manure scraper (30) of claim 3, wherein, the wheel at each corner extends beyond the side of the rectangular frame for engaging side wall of said stable, in particular wherein said wheel at each corner is perpendicular to the wheels for rolling over a floor surface.

5. The manure scraper (30) of any one of the preceding claims, further comprising a scraper bar actuator for increasing a space between a floor and the scraper surface (37).

6. The manure scraper (30) of claim 6, wherein said actuator is provided for rotating said scraper bar (33) along a longitudinal axis a distance above the lower end (35) of the scraper bar (33).

7. The manure scraper (30) of any one of the preceding claims, wherein said scraper bar (33) comprising a series of dividers (34) extending from the scraper surface (37) of the scraper bar (33) for preventing manure from displacing longitudinally along the scraper surface (37) of the scraper bar (33), wherein the scraper bar (33) has a lower end (35) for engaging a floor, and the dividers (34) comprise lower ends (36) ending at the lower end (35) of the scraper bar (33).

8. The manure scraper (30) of claim 7, wherein the dividers (34) are provided at every 50-200 cm along the scraper bar (33).

9. The manure scraper (30) of any one of the preceding claims, wherein the dividers (34) extend 10-50 cm from the scraper surface 37 of the scraper bar (33).

10. A stable comprising:
- the manure scraper (30) of any one of the preceding claims;
- a manure storage (1);
- a walk-on floor (13) provided with passages for manure and urine;
- a bottom floor, provided below the walk-on floor (13), said bottom floor comprising a series of floor parts (2) and with a top surface (5) at a fall, and comprising a discharge channel (3) at a lower part of said fall, wherein the discharge channel (3) discharges into a reservoir (10) for a thin fraction of the manure, which reservoir (10) is separated from the manure storage (1), wherein the bottom floor comprises a passage for a solid fraction of the manure and its collection in the manure storage (1), and wherein the manure scraper (30) is provided for shoving substantially the solid fraction of the manure, in particular the over the floor parts (2) towards the passage and into the manure storage (1).

11. The stable of the previous claim, wherein said bottom floor comprises side walls for engaging said guiding means.

12. The stable of the previous claim, wherein the scraper bar (33) of the manure scraper (30) is provides with its longitudinal direction along the fall direction of the bottom floor.

13. The stable of the previous claim, wherein the discharge channel (3) has side walls and a discharge channel bottom (7) at a fall, wherein the series of floor parts (2) with an edge connect to side walls of the discharge channel (3) so that on either side of the discharge channel (3) floor parts (2) at a fall slope down to the discharge channel (3), wherein the fall of the discharge channel (3) is transverse to the fall of the floor parts (2).

14. The stable according to any one of the preceding claims 10-13, wherein the fall of the floor parts is 1-5 degrees, particularly 1-3 degrees, specifically 1.5-2.5 degrees, and the longitudinal direction of the scraper bar (33) is substantially in the direction of the fall.

15. Use of the manure scraper of any one of the preceding claims on a slanted floor, in particular substantially slanted in the longitudinal direction of the scraper bar.
